(19) Europäisches Patentamt
European Patent Office
Office européen des brevets

(11) Publication number: **0 247 896 B1**

# (12) EUROPEAN PATENT SPECIFICATION

(45) Date of publication of patent specification: **19.06.91**

(51) Int. Cl.5: **B32B 27/32**, B32B 27/18

(21) Application number: **87304790.6**

(22) Date of filing: **29.05.87**

The file contains technical information submitted after the application was filed and not included in this specification

## (54) Sealable films.

(30) Priority: **30.05.86 GB 8613162**

(43) Date of publication of application:
**02.12.87 Bulletin 87/49**

(45) Publication of the grant of the patent:
**19.06.91 Bulletin 91/25**

(84) Designated Contracting States:
**BE DE ES FR GB IT**

(56) References cited:
**EP-A- 0 147 088**
**EP-A- 0 201 798**
**DE-A- 3 015 056**

(73) Proprietor: **EXXON CHEMICAL PATENTS INC.**
**1900 East Linden Avenue**
**Linden New Jersey 07036(US)**

(72) Inventor: **Bossaert, Bernard Louis Luc**
**Gentse Steenweg 1140 B-44**
**B-1080 Brussels(BE)**
Inventor: **Ohlsson, Stefan Bertil**
**Bld Bischoffsheim 39 B-13**
**B-1000 Brussels(BE)**
Inventor: **Willems, William Frans Maria Josef**
**Sparrenweg 12**
**B-2850 Keerbergen(BE)**

(74) Representative: **Bawden, Peter Charles et al**
**EXXON CHEMICAL LIMITED EXXON CHEMICAL TECHNOLOGY CENTRE PO Box 1**
**Abingdon Oxfordshire OX13 6BB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to films based on polypropylene and which can be sealed by the application of heat.

Various polypropylene films have been described, e.g. in GB 2028168A, EP 002606, EP 135178 and DE 3247988 where the core or substrate of the film is polypropylene. Various additives can be added for example certain modulus improvers, certain antistatic media, siloxanes and pigments.

However, none of these documents teach that films may be obtained having a seal strength which is significanntly improved compared with previously known polyolefin films. We have devised films having a seal layer needing only two components which show improved seal strength properties over those previously known having only two components in the seal layer, i.e. either the seal strength is much improved at the same temperature of sealing or the same seal strength can be obtained at lower temperatures.

According to this invention a sealable film comprises a base layer comprising a polyolefin, said layer having on at least one surface thereof 1 to 20 weight % based on the weight of the base layer, of a film layer comprising a mixture of (a) 70 to 95, preferably 70 to 90 wt % of a linear low density polyethylene or a polymer of at least one olefinically unsaturated monomer provided at least one of the monomers has a functional group and (b) 5 to 30, preferably 10 to 30 wt % of a resin of molecular weight lower than that of the liner low density polyethylene (a) or of the polymer (a) the said mixture having a softening point of from 125 to 180 °C as measured by ASTM E28

These films are capable of being used in the packaging industry and can meet the stringent criteria which are required for such films, such as sufficiently high modulus, inherent excellent clarity and in particular superior seal strength properties.

The base layer comprises a polyolefin. The polyolefin is preferably a polymer of a mono-alpha olefin containing from 2 to 8 carbon atoms and particularly 2 to 4 carbon atoms per molecule. Thus the polymer may be a homopolymer of one of the following olefins or a copolymer of two or more of the following olefins, ethylene, propylene, butene-l and 4-methyl pentene-l. A particularly suitable material for the base layer of the film is polypropylene, especially a high molecular weight stereoregular predominantly crystalline polymer of propylene. Alternatively, a copolymer of propylene with up to 20 weight per cent of another olefin, e.g. ethylene, could be used. An especially preferred polyolefin is an isotactic polypropylene with a density of from 0.86 to 0.92 g/ml measured according to ASTM Dl505 and a melt flow index of from l to l5 g/l0 min as determined according to ASTM D l238 (conditions 230 °C and 2.l6 kg). It may be made by Ziegler polymerisation methods using for example $AlCl_3$ and $TiCl_4$ as catalyst.

The base layer or core of the film has on one or preferably both surfaces l to 20 weight per cent, preferably l to l0 weight per cent and particularly about 5 weight per cent for the or each surface based on the weight of the base layer, of film layer comprising a mixture of (a) 70 to 95, preferably 70 to 90 weight % of a linear low density polyethylene or the hereinbefore defined polymer and 5 to 30, preferably l0 to 30 weight per cent of (b) the low molecular weight resin, preferably a hydrogenated resin.

The linear low density polyethylene (LLDPE) is defined as a linear copolymer of ethylene and an alpha-olefin such as butene, hexene or octene or 4-methyl-pentene-l having a density of between 0.875 and 0.939 gm/cc measured according to ASTM D l505 and comprises at least 85 mole % of ethylene. It is usually prepared by polymerisation in the presence of Ziegler catalysts such as $AlCl_3$ and $TiCl_4$.

One particular example of a linear low density polyethylene is very low density polyethylene VLDPE. This is a linear copolymer of ethylene and an alpha-olefin such as butene, hexene or octene or 4-methyl pentene-l having a density of from 0.875 to 0.9l5 g/cc measured according to ASTM D l505 and comprises from 85 to 96 mol % of ethylene. It is also usually prepared by polymerisation in the presence of a Ziegler catalyst.

As an alternative to a linear low density polyethylene one can use a polymer of at least one olefinically unsaturated monomer, provided at least one of the monomers has a functional group. By functional group we mean a group containing at least one atom other than carbon or hydrogen, for example, the groups hydroxyl, carboxyl, carboxylic anhydride, carboxylate, ester, amino, amide, imide, halogen or sulphonate.

Suitable examples are an ethylene-vinyl acetate copolymer, polyvinyl chloride, polyvinylidene chloride, styrene-acrylonitrile copolymers and acrylonitrile-butadiene-styrene copolymers. Other polymers include random and graft copolymers where one of the monomers is ethylene or polar including acrylic acid, methacrylic acid, acrylate esters,maleic and other anhydrides and ionomeric materials formed by adding metal salts to such copolymers.

In general unsaturated monomers, copolymerizable with ethylene include unsaturated acids, acid anhydrides, and mono and diesters of the general formula:

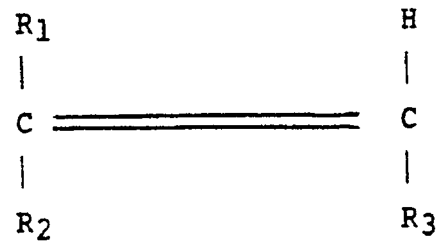

wherein $R_1$ is hydrogen or methyl; $R_2$ is a $OOCR_4$ or - $COOR_4$ group wherein $R_4$ is hydrogen or a $C_2$ to $C_{30}$, preferably a $C_1$ to $C_4$ straight or branched chain alkyl group and $R_3$ is hydrogen or - $COOR_4$. The monomer, when $R_1$ to $R_3$ are hydrogen and $R_2$ is $-00CR_4$ includes vinyl alcohol esters of $C_2$ to $C_{17}$ monocarboxylic acids. Examples of such esters include vinyl acetate, vinyl isobutyrate, vinyl laurate, vinyl myristate, vinyl palmitate, etc. When $R_2$ is $-COOR_4$ such esters include $C_8$ Oxo alcohol acrylate, methyl acrylate, methyl methacrylate, lauryl acrylate, isobutyl methacrylate, palmityl alcohol ester of alpha-methylacrylic acid, $C_{13}$ Oxo alcohol esters of methacrylic acid, etc. Examples of monomers wherein $R_1$ is hydrogen and $R_2$ and $R_3$ are $-00CR_4$ groups, include $C_{13}$ Oxo alcohol fumarate, di-$C_{13}$ Oxo alcohol fumarate, di-isopropyl maleate; di-lauryl fumarate; ethyl methyl fumarate, fumaric acid, maleic acid, etc.

Other unsaturated monomers copolymerizable with ethylene include $C_3$ to $C_{16}$ branched chain or straight-chain alpha monoolefins, as for example propylene, n-octene-l, 2-ethyldecene-l, n-decene-l, etc.

Small proportions, e.g. about 0 to 20 mole percent, of a third monomer, or even of a fourth monomer, can also be included in the copolymers, as for example a $c_2$ to $c_{16}$ branched or straight chainalpha monoolefin, e.g. propylene, n-octene-l, n-decene-l, etc. Thus, for example, a copolymer of 3 to 40 moles of ethylene with one mole of a mixture of 30 to 99 mole percent of unsaturated ester and 70 to l mole percent of olefin could be used.

The copolymers that are formed are random copolymers consisting primarily of an ethylene polymer backbone along which are distributed side chains of hydrocarbon or oxy-substituted hydrocarbon.

The Oxo alcohols used in preparing the esters mentioned above are isomeric mixutres of branched chain aliphatic primary alcohols prepared from olefins, such as polymers and copolymers of $C_3$ to $C_4$ monoolefins, reacted with carbon monoxide and hydrogen in the presence of a cobalt-containing catalyst such as cobalt carbonyl, at temperatures of about 148 to 204°C (300° to 400°F), under pressure of about 6g to 207 bar (1,000 to 3,000 p.s.i.) to form aldehydes. The resulting aldehyde product is then hydrogenated to form the Oxo alcohol, the latter being recovered by distillation from the hydrogenated product.

Particularly suitable examples include a copolymer of ethylene and a vinyl (or hydrocarbyl substituted) vinyl ester of a $C_1$ to $C_{30}$ monocarboxylic acid, preferably containing at least 89 wt % of ethylene (e.g. ethylene-vinyl acetate copolymer) such as ethylene-vinyl acetate copolymer containing 10 wt % vinyl acetate, an ethylene-vinyl acetate copolymer containing 95 wt % of ethylene, or one containing 0.10 to 1.95 wt % of the vinyl (or hydrocarbyl substituted vinyl) ester (e.g. vinyl acetate).

The other component of the surface layer(s) is a low molecular weight resin, preferably a hydrogenated resin. This resin has a molecular weight below that of the polyethylene or polymer and is usually less than 5000, preferably less than 1000, for example, 500 to 1000. The resin can be a natural or synthetic resin and can preferably have a softening point as mentioned by ASTM E-28 up to 150°C, especially up to 140°C.

Suitable resins which can be subsequently hydrogenated are hydrocarbon resins, ketone resins, polyamide resins, colophonium, coumarone resins, terpene resins, chlorinated aliphatic or aromatic hydrocarbon resins. Examples of hydrocarbon resins are polymers of coke oven gas, cracked naphtha, gasoil and terpene oil.

Particularly preferred hydrogenated resins are hydrogenated petroleum resins. These are usually prepared by catalytically hydrogenating a thermally polymerised steam cracked petroleum distillate fraction, especially a fraction having a boiling point of between 20°C and 280°C. These fractions usually are of compounds having one or more unsaturated cyclic rings in the molecule, such as cyclo dienes, cycloalkenes and indenes. It is also possible to hydrogenate resins produced by catalytic polymerisation of unsaturated hydrocarbons.

Before hydrogenation occurs the polymerised resin is usually dissolved in a saturated hydrocarbon solvent such as heptane. The hydrogenation catalysts used may be nickel, reduced nickel, or molybdenum sulphide. Hydrogenation can take place in a single stage at a temperature of 200°C to 330°C, preferably from 210°C to 230°C at a pressure of 20.3 to 121.6 bar (20 to 120 atmospheres), more preferably from 30.4 to 91.2 bar (30 to 90) atmospheres for a period of 5 to 7 hours. After filtering off the catalyst, the

solvent is removed by distillation and recovered for recycling. An improved hydrogenation process leading to increased yields of high quality hydrogenated hydrocarbon resins is described and claimed in EP-A-0082726.

It is preferred that the or each outer film layer comprises 75 to 84.5 weight per cent of the linear low density polyethylene or defined polymer and I5.5 to 25 weight per cent of the low molecular weight resin, for example about 80 weight per cent of the polyethylene or polymer and about 20 weight per cent of the low molecular weight resin.

The films of this invention, i.e. multilayer films are suitably formed by combining the components (which may if desired include other components such as an antistatic medium, blocking agents and slip aids) of the base layer and surface layer(s) in a conventional manner, preferably by a simultaneous co-extrusion technique.

Multiple-layer films according to the invention may be unorientated or uniaxially orientated, but are preferably biaxially orientated by drawing in two mutually perpendicular directions in the plane of the film to impart strength thereto. Orientation of flat film may be effected by a stenter technique, while orientated tubular film is suitably produced by coextruding the polymeric materials in the form of a multi-layer tube from an annular die, cooling the extruded tube (the cast tube), reheating and inflating the tube by the so-called "bubble" process to introduce transverse orientation, and simultaneously elongating the tube longitudinally to orientate the film in a lengthwise direction. The film is then preferably "heat-set", i.e. dimensional stability of the film is improved by heating the film, while restrained against thermal shrinkage, to a temperature above the glass transition temperature of the polymer from which the film is formed but below the melting point thereof.

The films may vary in thickness depending on the intended application, but films of a thickness of from 2 to I50 $\mu$m are usually suitable. Films intended for packaging are usually from I0 to 60 $\mu$m thick. The thickness of the or each layer is usually from 0.05 to 2.5 $\mu$m.

Example

In this Example co-extruded films of different composition were made and compared as to their sealability.

These films were biaxially orientated by drawing in two materially perpendicular directions in the plane of the film to impart strength thereto. The stenter technique was used to impart an orientation ratio of 500% in machine direction and of 900% in transverse direction. Each of the biaxially orientated films had two seal layers of I $\mu$m thickness while the total thickness was about 22 $\mu$m.

The first film which was for comparison purposes consisted of a core of isotactic polypropylene having a density of about 0.90 g/ml measured according to ASTM D I505 and a melt flow index of 2.8 g/I0 min as determined according to ASTM DI238 (conditions 230 °C and 2.I6 kg). On both faces of the core there was a copolymer of about 95.5 weight per cent propylene and 4.5 weight per cent of ethylene which was an isotactic copolymer with a density of 0.90 g/ml and a melt flow index of 6.5 g/I0 min as determined according to ASTM DI238 (conditions 230 °C and 2.I6 kg).

The second film was the same as the first film except that on both faces of the core of isotactic polypropylene there was a film of LLDPE. LLDPE is linear low density polyethylene prepared by copolymerising ethylene with n-butene, using a Ziegler catalyst, the copolymer having at least 96 mol per cent ethylene and a density of 0.9I8 g/ml.

The third film was the same as the first film except that each surface of the core was covered with a film comprising a blend of 80% by weight of LLDPE (see second film for details) and 20% by weight of a hydrogenated petroleum resin. The resin was prepared by catalytically hydrogenating a thermally polymerised steam cracked petroleum distillate fraction having a boiling point between 20 °C and 280 °C. The hydrogenation process was carried out as described in EP-A- 0082726. The resulting resin was characterised by a Ring and Ball softening point of I25 °C as measured by ASTM E 28.

The fourth film was the same as the third film except that each surface of the core was covered with a film comprising a blend of 80% by weight of VLDPE and 20% weight of the same hydrogenated petroleum resin as used in the manufacture of the second film. VLDPE is very low density polyethylene prepared by copolymerising ethylene with octene using a Ziegler catalyst, the copolymer having 95 mol per cent ethylene and a density of 0.9II g/ml measured by ASTM D I505 and a melt flow index of 7.0 g/I0 min as determined according to ASDTM DI238 (conditions I90 °C and 2.I6 kg).

The accompanying Fig I and 2 show the results obtained for the seal strength and hot tack for films I and 2 (comparative), 3 and 4 (according to the invention).

These tests were carried out as follows:

Seal strength

This is the "cold" heat seal strength of the film which is measured after the seal has cooled to ambient temperature and the full potential strength of the seal has developed.

A Packforsk Hot Tack Tester (model 52-B) from Design & Test Consult AB (Bromma-Sweden) has been used to make the heat seals. A strip of I5 mm wide and some 280 mm long is thereto folded over upon itself and sealed together between the heated jaws of this instrument. The formed seal has an area of some I5 × 5 mm. Dwell conditions on the seal have been kept constant at a pressure of 5 bar and a dwell time of 0.5 seconds. To measure the seal strength, the instrument is used in a mode whereby upon opening of the sealing jaws the automatic peeling action used for hot tack measurements is not activated. The seal is instead cooled to ambient temperature. The unsealed ends of the strip are then attached to the jaws of a tensile testing machine. The force required to break the seal at a rate of 508 mm/min is recorded by the tensile tester and expressed as the seal strength in kg/I5mm

Hot tack

This is the strength of the heat seal measured just after the seal has been made and before the thermal energy employed to form the heat seal has dissipated. The hot tack has been determined using the same Packforsk instrument. The heat seal is made as described above but just after the opening of the sealing jaws a peeling action is now automatically started and the force to break the seal is automatically recorded and expressed as the hot tack in kg/I5mm. The peeling operation takes place at a controlled delay time (= time between opening of the jaws and start of the peeling operation) and controlled peel rate. Following constant conditions have been used for all hot tack determinations : delay time = 0.9 seconds, peel rate = I00 mm/s.

From Fig I it can be seen that the seal strength (kg/I5 mm) for films 3 and 4 are much higher at temperatures of between I00° and I20° than for films I and 2.

From Fig 2 it can be seen that the hot tack (kg/I5 mm) for film 3 is much better than for film I for temperatures up to about I30°C. For film 4 the hot tack is better than that of film I for temperatures up to about II0°C.

It is quite surprising that with the presence of the relatively small amount (20 weight %) of hydrogenated resin in the surface layer and using linear low density polyethylene one achieves such good results compared with the prior art film.

**Claims**

1. A sealable film comprising a base layer which comprises a polyolefin, said layer having on at least one surface thereof 1 to 20 weight % based on the weight of the base layer, of a film layer comprising a mixture of (a) 70 to 95 weight per cent of a linear low density polyethylene or a polymer of at least one olefinically unsaturated monomer provided at least one of the monomers has a functional group and (b) 5 to 30 weight per cent of a resin of molecular weight lower than that of the linear low density polyethylene or of the polymer the said mixture having a softening point of from 125 to 180°C as measured by ASTM E 28.

2. A film according to claim 1 in which the film layer comprises a mixture of 70 to 90 wt % of the polymer as specified in claim 1 and 10 to 30 weight % resin.

3. A film according to claim 1 or 2 wherein the polyolefin in the base layer is a polymer of a mono alpha olefin containing 2 to 4 carbon atoms per molecule, preferably polypropylene.

4. A film according to claim 3 wherein the polypropylene is a low pressure isotactic polypropylene with a density of from 0.86 to 0.92 g/ml measured by ASTM D 1505 and a melt flow index of from 1 to 15 g/100 min as determined according to ASTM D1238 (conditions 230°C and 2.16 kg).

5. A film according to any one of the preceding claims wherein the base layer has on each surface 1 to 10 weight per cent based on the weight of the base layer of said film layer comprising said mixture of linear low density polyethylene or defined polymer and low molecular weight resin.

6. A film according to any one of the preceding claims wherein the resin in the or each surface film layer

is a hydrogenated resin, preferably a petroleum resin.

7. A film according to any of claims 5 to 6 wherein the hydrogenated resin has been prepared by hydrogenating using a hydrogenation catalyst at a temperature of 200° to 330°C, a thermally polymerised steam cracked distillate fraction or a catalytically polymerised unsaturated hydrocarbon fraction.

8. A film according to any one of the preceding claims wherein the linear low density polyethylene is a linear copolymer of ethylene and an alpha-olefin having a density measured by ASTM D 1505 of from 0.875 to 0.939 g/ml and comprising at least 85 mol % of ethylene.

9. A film according to claim 8 in which the alpha-olefin is butene, hexene, octene or 4-methyl pentene-1.

10. A film according to claim 9 or claim 10 in which the density of the copolymer is 0.875 to 1.915 g/ml, the said copolymer comprising from 85 to 96 mol % ethylene.

11. A film according to any one of claims 1 to 7 wherein the polymer of at least one olefinically unsaturated monomer is a copolymer of ethylene and a vinyl or (hydrocarbyl substituted) vinyl ester of a $C_1$ to $C_{30}$ monocarboxylic acid.

12. A film according to any one of the preceding claims wherein each surface film layer comprises 75 to 84.5 weight % of linear low density polyethylene or of defined polymer and 15.5 to 25 weight % of the low molecular weight resin.

13. A film according to any one of the preceding claims which is biaxially orientated.

14. A film according to any one of the preceding claims which is 10 to 60 μm thick and wherein the thickness of the or each outer film layer is 0.05 to 2.5 μm.

## Revendications

1. Film soudable, comprenant une couche de base qui renferme une polyoléfine, ladite couche comprenant sur au moins une de ses surfaces 1 à 20 % en poids, sur la base du poids de la couche de base, d'une pellicule consistant en un mélange (a) de 70 à 95 % en poids d'un polyéthylène linéaire basse densité ou d'un polymère d'au moins un monomère à insaturation oléfinique, sous réserve qu'au moins un des monomères possède un groupe fonctionnel, et (b) de 5 à 30 pour cent en poids d'une résine d'un poids moléculaire plus bas que celui du polyéthylène linéaire basse densité ou du polymère, ledit mélange ayant un point de ramollissement de 125°C à 180°C, tel qu'il est mesuré suivant la norme ASTM E28.

2. Film suivant la revendication 1, dans lequel la pellicule consiste en un mélange de 70 à 90 % en poids du polymère suivant la revendication 1 et de 10 à 30 % en poids de résine.

3. Film suivant la revendication 1 ou 2, dans lequel la polyoléfine dans la couche de base est un polymère d'une mono-alpha-oléfine contenant 2 à 4 atomes de carbone par molécule, de préférence le polypropylène.

4. Film suivant la revendication 3, dans lequel le polypropylène est un polypropylène isotactique basse pression, ayant une masse volumique de 0,86 à 0,92 g/ml, telle qu'elle est mesurée suivant la norme ASTM D 1505, et un indice de fluidité de 1 à 15 g/10 minutes tel qu'il est déterminé suivant la norme ASTM D1238 (conditions : 230°C et 2,16 kg).

5. Film suivant l'une quelconque des revendications précédentes, dans lequel la couche de base possède sur chaque surface 1 à 10 pour cent en poids, sur la base du poids de la couche de base, de la pellicule consistant en ledit mélange de polyéthylène linéaire basse densité ou du polymère défini et de résine de bas poids moléculaire.

6. Film suivant l'une quelconque des revendications précédentes, dans lequel la résine dans la, ou

chaque, couche superficielle est une résine hydrogénée, de préférence une résine de pétrole.

7. Film suivant la revendication 5 ou 6, dans lequel la résine hydrogénée a été préparée par hydrogénation, au moyen d'un catalyseur d'hydrogénation à une température de 200° à 330° C, d'une fraction de distillat ayant subi un craquage à la vapeur d'eau et une polymérisation à chaud ou d'une fraction hydrocarbonée insaturée ayant subi une polymérisation catalytique.

8. Film suivant l'une quelconque des revendications précédentes, dans lequel le polyéthylène linéaire basse densité est un copolymère linéaire d'éthylène et d'une alpha-oléfine ayant une masse volumique, mesurée suivant la norme ASTM D 1505, de 0,875 à 0,939 g/ml, et comprenant au moins 85 moles % d'éthylène.

9. Film suivant la revendication 8, dans lequel l'alpha-oléfine est le butène, l'hexène, l'octène ou le 4-méthyl-pentène-1.

10. Film suivant la revendication 8 ou la revendication 9, dans lequel le copolymère possède une masse volumique comprise dans l'intervalle de 0,875 à 1,915 g/ml et comprend 85 à 96 moles % d'éthylène.

11. Film suivant l'une quelconque des revendications 1 à 7, dans lequel le polymère d'au moins un monomère à insaturation oléfinique est un copolymère d'éthylène et d'un ester de vinyle (ou de vinyle à substitution hydrocarbyle) d'un acide monocarboxylique en $C_1$ à $C_{30}$.

12. Film suivant l'une quelconque des revendications précédentes, dans lequel chaque pellicule superficielle comprend 75 à 84,5 % en poids de polyéthylène linéaire basse densité ou du polymère défini et 15,5 à 25 % en poids de la résine de bas poids moléculaire.

13. Film suivant l'une quelconque des revendications précédentes, qui est orienté de manière biaxiale.

14. Film suivant l'une quelconque des revendications précédentes, qui possède une épaisseur de 10 à 60 $\mu$m et dans lequel l'épaisseur de la, ou de chaque, couche extérieure va de 0,05 à 2,5 $\mu$m.

## Ansprüche

1. Siegelbare Folie, die eine ein Polyolefin enthaltende Basisschicht umfaßt, die auf mindestens einer Oberfläche davon 1 bis 20 Gew.%, bezogen auf das Gewicht der Basisschicht, einer Folienschicht aufweist, die eine Mischung aus (a) 70 bis 95 Gew.% eines linearen Polyethylens niederer Dichte oder eines Polymers aus mindestens einem olefinisch ungesättigten Monomer, mit der Maßgabe, daß mindestens eines der Monomeren eine funktionelle Gruppe aufweist, und (b) 5 bis 30 Gew.% eines Harzes mit einem niedrigeren Molekulargewicht als dem des linearen Polyethylens niederer Dichte oder des Polymeren umfaßt, wobei die Mischung einen Erweichungspunkt, bestimmt nach ASTM E28, von 125 bis 180° C hat.

2. Folie nach Anspruch 1, bei der die Folienschicht eine Mischung aus 70 bis 90 Gew.% des Polymeren, wie in Anspruch 1 spezifiziert, und 10 bis 30 Gew.% Harz umfaßt.

3. Folie nach Anspruch 1 oder 2, bei der das Polyolefin in der Basisschicht ein Polymer aus Mono-$\alpha$-olefin mit 2 bis 4 Kohlenstoffatomen pro Molekül, vorzugsweise Polypropylen, ist.

4. Folie nach Anspruch 3, bei der das Polypropylen ein isotaktisches Niederdruckpolypropylen mit einer Dichte von 0,86 bis 0,92 g/ml, gemessen nach ASTM D 1505, und einem Schmelzflußindex von 1 bis 15 g/l00 min, bestimmt nach ASTM D 1238 (Bedingungen 230° C und 2,16 kg), ist.

5. Folie nach einem der vorhergehenden Ansprüche, bei der die Basisschicht auf jeder Oberfläche 1 bis 10 Gew.%, bezogen auf das Gewicht der Basisschicht, von der Folienschicht, welche die Mischung aus linearem Polyethylen niederer Dichte oder definiertem Polymer und niedermolekulargewichtigem Harz umfaßt, aufweist.

6. Folie nach einem der vorhergehenden Ansprüche, bei der das Harz in der oder jede Oberflächenfolienschicht ein hydriertes Harz, vorzugsweise ein Erdölharz ist.

7. Folie nach einem der Ansprüche 5 bis 6, bei der das hydrierte Harz hergestellt worden ist, indem unter Verwendung eines Hydrierungskatalysators bei einer Temperatur von 200 bis 330 °C eine thermisch polymerisierte dampfgecrackte Destillatfraktion oder eine katalytisch polymerisierte ungesättigte Kohlenwasserstofffraktion hydriert wird.

8. Folie nach einem der vorhergehenden Ansprüche, bei der das lineare Polyethylen niederer Dichte ein lineares Copolymer aus Ethylen und einem α-Olefin mit einer nach ASTM D 1505 gemessenen Dichte von 0,875 bis 0,939 g/cm³ ist und mindestens 85 Mol.% Ethylen umfaßt.

9. Folie nach Anspruch 8, bei der das α-Olefin Buten, Hexen, Octen oder 4-Methyl-penten-l ist.

10. Folie nach Anspruch 8 oder Anspruch 9, bei der die Dichte des Copolymeren 0,875 bis 0,915 g/cm³ ist und das Copolymer 85 bis 96 Mol.% Ethylen umfaßt.

11. Folie nach einem der Ansprüche 1 bis 7, bei der das Polymer aus mindestens einem olefinisch ungesättigten Monomer ein Copolymer aus Ethylen und einem Vinyl- oder (kohlenwasserstoffsubstituierten) Vinylester einer $C_1$-$C_{30}$-Monocarbonsäure ist.

12. Folie nach einem der vorhergehenden Ansprüche, bei der jede Oberflächenfolienschicht 75 bis 84,5 Gew.% lineares Polyethylen niederer Dichte oder definiertes Polymer und 15,5 bis 25 Gew.% des niedermolekulargewichtigen Harzes umfaßt.

13. Folie nach einem der vorhergehenden Ansprüche, die biaxial orientiert ist.

14. Folie nach einem der vorhergehenden Ansprüche, die 10 bis 60 µm dick ist und bei der die Dicke der oder jeder äußeren Folienschicht 0,05 bis 2,5 µm ist.

Fig 1

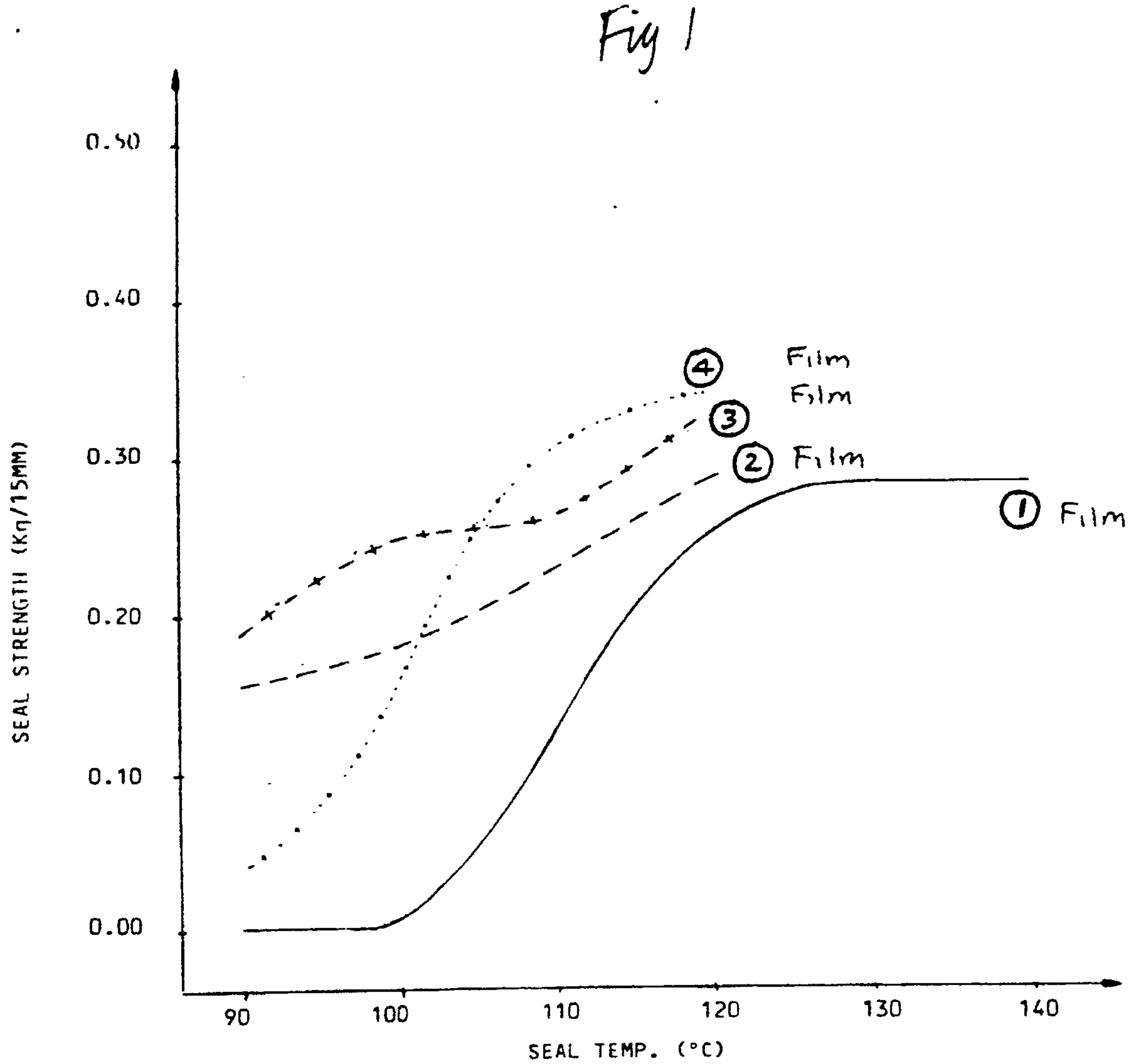
0.50
0.40
0.30
0.20
0.10
0.00
SEAL STRENGTH (Kg/15MM)
90
100
110
120
130
140
SEAL TEMP. (°C)
④ Film
③ Film
② Film
① Film

Fig 2

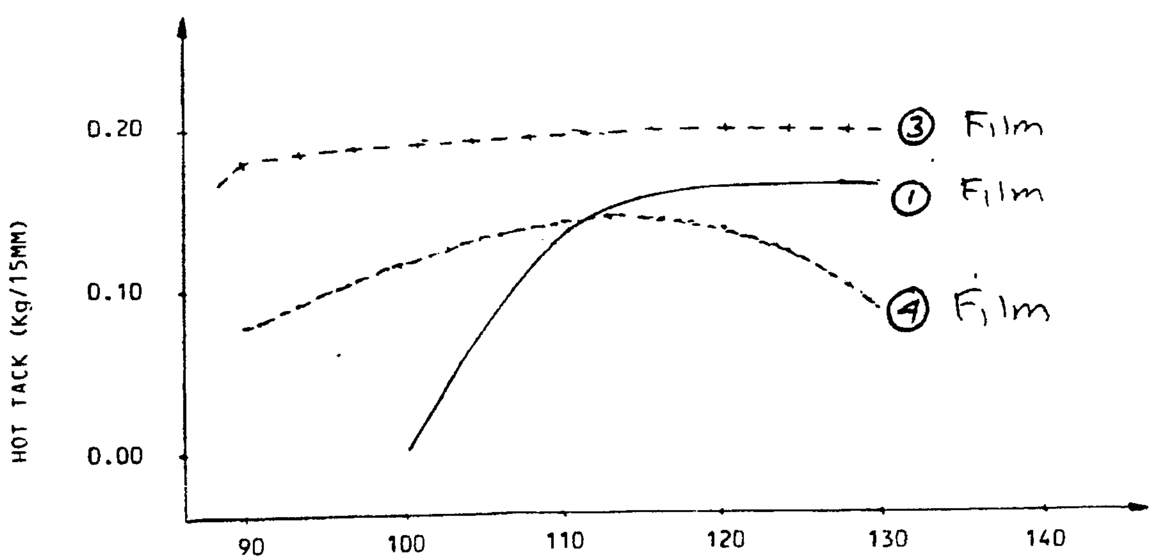
0.20
0.10
0.00
HOT TACK (Kg/15MM)
90
100
110
120
130
140
③ Film
① Film
④ Film